(19) Europäisches Patentamt
European Patent Office
Office européen des brevets

(11) **EP 3 639 427 B1**

(12) **FASCICULE DE BREVET EUROPEEN**

(45) Date de publication et mention de la délivrance du brevet:
**26.07.2023   Bulletin 2023/30**

(21) Numéro de dépôt: **18742840.4**

(22) Date de dépôt: **06.06.2018**

(51) Classification Internationale des Brevets (IPC):
**H04L 1/1829** *(2023.01)*      **H04L 1/1812** *(2023.01)*
**H04L 1/00** *(2006.01)*

(52) Classification Coopérative des Brevets (CPC):
**H04L 1/0003; H04L 1/0009; H04L 1/0019; H04L 1/1812; H04L 1/1864;** H04L 2001/0097

(86) Numéro de dépôt international:
**PCT/FR2018/000162**

(87) Numéro de publication internationale:
**WO 2018/229362 (20.12.2018 Gazette 2018/51)**

(54) **PROCÉDÉ ET SYSTÈME OMAMRC DE TRANSMISSION AVEC ADAPTATION LENTE DE LIEN**

OMAMRC-ÜBERTRAGUNGSVERFAHREN UND -SYSTEM MIT LANGSAMER-LINK-ANPASSUNG

OMAMRC TRANSMISSION METHOD AND SYSTEM WITH SLOW-LINK ADAPTATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **12.06.2017   FR 1755212**

(43) Date de publication de la demande:
**22.04.2020   Bulletin 2020/17**

(73) Titulaire: **Orange**
**92130 Issy-les-Moulineaux (FR)**

(72) Inventeurs:
• **CEROVIC, Stephan**
**92326 Châtillon Cedex (FR)**
• **MOHAMAD, Abdulaziz**
**92326 Châtillon Cedex (FR)**
• **VISOZ, Raphaël**
**92326 Châtillon Cedex (FR)**

(56) Documents cités:
• **MOHAMAD ABDULAZIZ ET AL: "Cooperative Incremental Redundancy Hybrid Automatic Repeat Request Strategies for Multi-Source Multi-Relay Wireless Networks", IEEE COMMUNICATIONS LETTERS, IEEE SERVICE CENTER, PISCATAWAY, NJ, US, vol. 20, no. 9, 1 septembre 2016 (2016-09-01), pages 1808-1811, XP011622357, ISSN: 1089-7798, DOI: 10.1109/LCOMM.2016.2590538 [extrait le 2016-09-08] cité dans la demande**
• **MOHAMAD ABDULAZIZ ET AL: "Practical joint network-channel coding schemes for slow-fading orthogonal multiple-access multiple-relay channels", 2014 IEEE GLOBECOM WORKSHOPS (GC WKSHPS), IEEE, 8 décembre 2014 (2014-12-08), pages 936-941, XP032747961, DOI: 10.1109/GLOCOMW.2014.7063553**

## Description

La présente invention se rapporte au domaine des communications numériques. Au sein de ce domaine, l'invention se rapporte plus particulièrement à la transmission de données codées entre des sources et une destination avec relayage par des relais, les communications relayées sont dites coopératives. Dans le contexte de l'invention, une source peut faire office de relais après décodage des informations reçues d'une autre source. Les systèmes considérés comportent plusieurs sources, un ou plusieurs relais (un relais pouvant être une source) et une destination.

Il existe de nombreuses techniques de relayage connues sous leur appellation anglo-saxonne : « amplify and forward », « décodé and forward », « compress-and-forward », « non-orthogonal amplify and forward », « dynamic décodé and forward », etc.

L'invention s'applique notamment, mais non exclusivement, à la transmission de données via des réseaux mobiles, par exemple pour des applications temps réel, ou via par exemple des réseaux de capteurs. Le réseau est un réseau multi-utilisateurs, constitué de plusieurs sources, plusieurs relais et un destinataire utilisant un schéma d'accès multiple orthogonal du canal de transmission entre les relais et la destination, noté OMAMRC (« *Orthogonal Multiple-Access Multiple-Relay Channel* » selon la terminologie anglosaxonne). Le système met en oeuvre une stratégie de coopération dite IR-HARQ (Incremental Redundancy Hybrid-ARQ selon la terminologie anglosaxonne) basée sur un relayage sélectif dit SDF (Sélective Decode and Forward selon la terminologie anglosaxonne).

Dans ce type de coopération, les sources indépendantes entre elles diffusent leurs séquences d'informations codées sous forme de messages à l'attention d'un seul destinataire et en présence de relais. Les relais de type *« Half Duplex »* (HD, (c'est-à-dire qu'un relais ne peut recevoir et transmettre simultanément)) reçoivent les messages des sources, les décodent et génèrent un message uniquement à partir des messages des sources décodés sans erreur. Les relais accèdent ensuite au canal de manière orthogonale entre eux pour transmettre leur message vers la destination. La sélectivité des relais fait qu'un relais ne transmet un message que s'il décode au moins une source sans erreur.

Les liens entre les différents noeuds du système sont sujets à des évanouissements lents (slow fading en anglais) et à du bruit blanc Gaussien. L'état (CSI : Channel State Information selon la terminologie anglosaxonne) de chaque lien direct avec la destination est disponible à la destination. Un retour (feedback selon la terminologie anglosaxonne) limité est autorisé depuis la destination vers les sources et vers les relais. La retransmission d'une source i.e du message d'une source, demandée dans le signal de retour se traduit en l'émission d'une redondance par les relais basée sur un codage incrémental aux sources. Il existe en outre des canaux de contrôle pour que chaque noeud informe la destination des messages reçus et correctement décodés.

Un tel procédé est particulièrement adapté à un système déployé en milieu urbain dans lequel le canal de transmission a généralement un profil à évanouissements dit de Rayleigh. En effet, de tels évanouissements perturbent le signal transmis et se traduisent par une probabilité non nulle de détection erronée (probabilité dite de coupure ou d'« outage » selon la terminologie anglosaxonne).

## Art antérieur

Parmi les techniques de transmission avec relayage, il est connu de [1] un procédé mettant en oeuvre une stratégie de coopération IR-HARQ basée sur un relayage sélectif dit SDF. Les auteurs considèrent un système OMAMRC à M sources, L relais et une destination avec un accès orthogonal au canal pour tous les noeuds ce qui permet de limiter les interférences. Les liens entre les différents noeuds sont sujets à des évanouissements lents et à du bruit blanc gaussien. Chaque relais est distinct des sources et half-duplex (il ne peut recevoir et émettre en même temps).

Les sources codent des messages d'une trame en bloc successifs selon un codage à redondance incrémentale finie.

La transmission d'une trame se fait en au maximum $M + T_{max}$ intervalles de temps (time slots) divisés en deux phases.

Pendant la première phase de $M$ intervalles de temps, chaque source émet ses mots de code pendant $N_1$ utilisations du canal.

A chaque bloc reçu, un module de décision du relais décide des messages décodés sans erreur à partir des messages estimés en testant le CRC (Cyclic Redundancy Check selon la terminologie anglosaxonne) inclus dans le message, ce qui permet au relais de déterminer un jeu de sources correctement décodées.

Pendant la seconde phase de $T_{max}$ intervalles de temps, la destination planifie le noeud (source ou relais) qui émet à chaque intervalle de temps en utilisant un canal de contrôle de retour limité (limited feedback) pour transmettre un message de retour. Ce message de retour est basé sur son résultat de décodage des trames reçues. Si le décodage des sources est correct le retour est un message de type *ACK*. Si le décodage des sources est erroné le message de retour est typiquement un *NACK*.

A réception des *ACK/NACK* communs, les relais transmettent leur jeu de sources correctement décodées. La destination sélectionne alors le noeud actif à l'intervalle courant via un message de retour ainsi qu'éventuellement le jeu de sources avec lequel le noeud doit coopérer.

La destination contrôle ainsi la transmission des sources et des relais en utilisant ces messages de retour ce qui permet d'améliorer l'efficacité spectrale et la fiabilité en augmentant la probabilité de décodage de toutes les sources par la destination bien que cette dernière ne connaisse pas la qualité (CSI) des liens sources-relais et relais-relais.

Le protocole permet d'atteindre une efficacité maximale en limitant les messages participant au codage réseau d'un relais à ceux qui n'ont pas encore été correctement décodés par la destination. La capacité de codage du relais est ainsi ajustée au strict nécessaire à chaque sous intervalle en fonction du retour de la destination. En outre le lien entre le relais et la destination n'est pas encombré par des informations déjà connues de la destination.

Bien que le procédé procure une importante efficacité spectrale grâce au gain de codage et augmente la fiabilité grâce au gain de diversité de la transmission, il est considéré dans [1] que les débits des sources sont symétriques.

## Caractéristiques principales de l'invention

La présente invention a pour objet un procédé de transmission de messages successifs formant une trame dans un système de télécommunication à $M$ sources, $L$ relais et une destination, $M > 1$, $L \geq 1$ selon un schéma d'accès multiple orthogonal du canal de transmission entre les $M$ sources et les $L$ relais avec un nombre maximum de $M + T_{max}$ intervalles de temps par trame transmise dont M intervalles alloués pendant une première phase à la transmission successive des $M$ sources, et $T_{max}$ intervalles de transmission coopérative alloués pendant une deuxième phase à un ou plusieurs noeuds pris parmi les sources et les relais selon une sélection déterminée. Le procédé comprend :

- une phase initiale d'adaptation de lien avec détermination d'un débit initial pour chaque source par la destination sur la base d'un SNR moyen de chacun des liens du système et avec transmission à chaque source de ce débit initial,
- pour chaque trame parmi plusieurs trames, les transmissions successives des messages des M sources pendant les M intervalles de la première phase avec respectivement des schémas de modulation et de codage déterminés à partir des débits initiaux,

Le procédé est tel que l'adaptation de lien est de type lent et consiste à maximiser le débit somme de toutes les sources sous contrainte d'un BLER moyen cible (prédit basé sur la probabilité de coupure) $\varepsilon_{com}$ à l'issue de $X \geq 1$ transmissions coopératives.

Le système de transmission OMAMRC considéré comporte au moins un relais et deux sources (le relais pouvant être une des sources), chacune de ces sources pouvant fonctionner à des instants différents soit comme une source, soit comme un relais. La terminologie noeud relais couvre aussi bien un relais qu'une source agissant comme un relais.

Les sources indépendantes entre elles diffusent leurs séquences d'informations codées sous forme de messages à l'attention d'un seul destinataire. Les relais et les sources autres que celle qui émet, de type *« Half Duplex »* (HD, (c'est-à-dire qu'une source ou un relais ne peut recevoir et transmettre simultanément)) reçoivent les messages successifs des sources, les décodent et génèrent un message uniquement à partir des messages des sources décodés sans erreur. Les noeuds relais (relais et sources) accèdent ensuite au canal de manière orthogonale entre eux pendant la seconde phase pour transmettre leur message vers la destination. La sélectivité des noeuds relais fait qu'un noeud relais ne transmet un message que s'il décode au moins une source sans erreur. Les liens entre les différents noeuds du système sont sujets à des évanouissements lents (slow fading selon la terminologie anglosaxonne) et à du bruit blanc Gaussien. Un retour (feedback) limité est autorisé depuis la destination vers les sources et vers les relais. La transmission d'un noeud relais lors de la seconde phase se traduit en l'émission d'une redondance basée sur un codage incrémental aux sources.

Contrairement aux techniques connues de transmission avec mise en oeuvre d'une stratégie de coopération IR-HARQ basée sur un relayage SDF, le procédé se place dans le contexte d'un système avec des débits asymétriques entre les sources et met en oeuvre une stratégie pour maximiser le débit somme au sein du système considéré. Ce système est tel que la destination n'a pas la connaissance des liens instantanés entre les sources et les relais mais uniquement des liens instantanés entre les sources et la destination et entre les relais et la destination.

Ainsi, la stratégie de coopération selon l'invention est telle que les sources et les relais coopèrent pour maximiser la somme des débits transmis entre les sources et la destination dans une situation plus proche de la réalité i.e. où il n'y a pas de symétrie imposée entre les débits.

Le système considéré est tel que les sources peuvent elle-même être des relais. Un noeud relais se distingue d'une source s'il n'a pas de message à transmettre qui lui soit propre i.e. il ne fait que retransmettre des messages provenant d'autres noeuds.

Le procédé distingue trois phases, une phase initiale et, pour chaque trame à transmettre, une 1ère phase et une 2nde phase.

Lors de la phase d'initialisation, la destination détermine un débit initial pour chaque source en prenant en compte le SNR moyen de chacun des liens du système. La destination estime les SNR des liens directs : source vers destination et relais vers destination selon des techniques connues basées sur l'exploitation de signaux de référence. La qualité des liens source - source et source - relais est estimée par les sources et les relais en exploitant ces mêmes signaux de référence. Les sources et les relais transmettent à la destination les qualités estimées des liens. Cette transmission intervient avant la phase d'initialisation. Seule la valeur moyenne du SNR étant prise en compte, son rafraîchissement intervient à une échelle de temps longue c'est-à-dire sur un temps qui permet de moyenner les variations rapides (fast fading selon la terminologie anglosaxonne) du canal. Ce temps est de l'ordre du temps nécessaire pour parcourir plusieurs dizaines de longueur d'onde de la fréquence du signal transmis pour une vitesse donnée. La phase d'initialisation intervient par exemple toutes les 200 à 1000 trames. La destination remonte aux sources via une voie de retour les débits initiaux déterminés afin de maximiser le débit somme moyen des sources sous la contrainte que la probabilité de coupure commune après X retransmission coopératives soit inférieure ou égale à $\varepsilon_{com}$. La probabilité de coupure moyenne $\varepsilon_{com}$ peut être assimilée au BLER conjoint des sources moyenné sur les variations rapides du canal et après X retransmissions coopératives.

Lors de la première phase, les $M$ sources transmettent successivement leur message pendant les $M$ intervalles en utilisant respectivement des schémas de modulation et de codage déterminés à partir des débits initiaux.

Lors de la 2nde phase, les messages des sources sont retransmis de façon coopérative soit par les relais soit par les sources. Pendant cette phase, on parle de retransmissions. En effet, pour une source donnée, seule une redondance supplémentaire peut faire l'objet de cette transmission lorsque le codage à la source est de type incrémental. Le BLER résiduel pour chaque message transmis est donc contrôlé en effectuant des (re)transmissions coopératives. Chaque retransmission (par les relais ou les sources) correspond à l'envoi de parité supplémentaire par rapport à la transmission lors de la première phase. La modulation restant constante, le nombre de bits de parité est déterminé par le nombre d'utilisations de canal disponible ($N2$ pour le codage réseau, $N2/P$ pour $P$ sources décodées correctement au relais pour un codage distribué).

Ainsi contrairement à des techniques connues et largement répandues, l'adaptation de lien est de type lent et non pas rapide et tient compte d'un nombre X de retransmissions. Une adaptation rapide est basée sur une connaissance instantanée de la qualité du canal. Selon l'invention, l'adaptation lente a pour avantage de limiter l'occupation dans la bande ou hors bande des informations de contrôle nécessaires à cette adaptation. L'invention comprend aussi $X$ retransmission coopératives ce qui permet de prendre en compte la qualité des liens source-relais et relais-destination dans le choix du débit initial par source.

Selon des techniques bien connues et largement déployées en lien avec le standard LTE (3GPP), la valeur initiale du MCS est déterminée la plus grande possible sous la contrainte d'un taux d'erreur bloc BLER (Block Error rate selon la terminologie anglosaxonne) individuel (pour chaque source) qui ne dépasse pas $\varepsilon_{ind}$ = 10% en considérant que le BLER est moyenné par rapport au bruit. Le BLER résiduel (de 10%) est selon ces techniques pris en compte lors de retransmissions qui interviennent après les premières transmissions. Le BLER selon le LTE est un compromis entre une minimisation des signaux de contrôle et une maximisation du débit radio dès les premières transmissions. Le débit radio pour la source i est donné par $R_i * (1 - BLER_i)$ avec $R_i$ le débit et $BLER_i$ le taux d'erreur bloc individuel pour un canal de propagation donné.

Ainsi contrairement à ces techniques largement connues et largement répandues, les débits initiaux sont déterminés selon l'invention non pas pour atteindre un BLER maximum de 10% à l'issue des premières transmissions mais à l'issue des $X \geq 1$ transmissions coopératives.

Lors de la 2nde phase, il y a si nécessaire une transmission coopérative par un ou par plusieurs dispositifs pris parmi les sources et les relais au choix de la destination selon une stratégie de type IR-HARQ qui intervient après les $X$ transmissions.

Ainsi, les débits initiaux déterminés par la destination sont réduits lentement pour être proches de l'optimal en utilisant les slots (rounds) de la 2nde phase de manière à atteindre un débit somme maximum avec l'objectif que la destination décode avec succès le message de chaque source dans un délai raisonnable i.e. avec un nombre limité Y $\geq 1$ de transmissions pendant la 2nde phase.

Selon l'invention, le procédé est tel que la maximisation du débit somme comprend une maximisation du débit individuel de chaque source en considérant les messages des autres sources connus sous contrainte d'un BLER moyen individuel cible $\varepsilon_{com}/M$ à l'issue des X transmissions coopératives.

Selon l'invention, le procédé est tel que, après maximisation, les $M$ débits individuels pris ensemble sont augmentés ou diminués simultanément

Selon un mode de réalisation, le procédé comprend en outre pendant la 2nde phase à l'issue des $X$ transmissions coopératives :

- une transmission coopérative d'un ou de plusieurs noeuds pris parmi les sources et les relais selon une sélection de type IR-HARQ.

Selon un mode de réalisation, le procédé est tel que les $X$ transmissions coopératives interviennent selon une sélection connue par la destination et les relais à l'avance.

Selon un mode de réalisation, le procédé est tel que la sélection est déterminée par la destination et de type IR-HARQ pour toutes les transmissions coopératives.

Selon un mode de réalisation, le procédé est tel que pour toute sélection de type IR-HARQ, la destination sélectionne le noeud qui maximise le nombre de sources décodées correctement après retransmission par ce noeud, le nombre de sources décodés correctement étant issue d'une prédiction par la destination.

Selon un mode de réalisation de l'invention, le procédé de transmission des messages résulte d'une application logicielle découpée en plusieurs applications logicielles spécifiques mémorisées dans les sources, dans les relais et dans la destination, un récepteur d'une station de base par exemple. L'exécution de ces applications logicielles est apte à la mise en oeuvre du procédé de transmission.

L'invention a en outre pour objet un système comprenant $M$ sources half-duplex, $L$ relais half-duplex et une destination, $M > 1$, $L \geq 1$, pour une mise en oeuvre d'un procédé de transmission selon un objet précédent.

L'invention a en outre pour objet chacune des applications logicielles spécifiques sur un support d'informations, lesdites applications comportant des instructions de programme adaptées à la mise en oeuvre du procédé de transmission lorsque ces applications sont exécutées par des processeurs.

L'invention a en outre pour objet des mémoires configurées comportant des codes d'instructions correspondant respectivement à chacune des applications spécifiques.

La mémoire peut être incorporée dans n'importe quelle entité ou dispositif capable de stocker le programme. La mémoire peut-être de type ROM, par exemple un CD ROM ou une ROM de circuit microélectronique, ou encore de type magnétique, par exemple une clé USB ou un disque dur.

D'autre part, chaque application spécifique selon l'invention peut être téléchargée depuis un serveur accessible sur un réseau de type Internet.

Les caractéristiques optionnelles présentées ci-dessus dans le cadre du procédé de transmission peuvent éventuellement s'appliquer à l'application et à la mémoire ci-dessus évoquées.

La présente invention se rapporte également à un système de communication comprenant au moins deux sources, un relais et un destinataire pour la mise en oeuvre du procédé de transmission en objet.

## Liste des figures

D'autres caractéristiques et avantages de l'invention apparaîtront plus clairement à la lecture de la description suivante de modes de réalisation, donnés à titre de simples exemples illustratifs et non limitatifs, et des dessins annexés, parmi lesquels :

- la figure 1 est un schéma d'un système dit OMAMRC (Orthogonal Multiple Access Multiple Relays Channel) selon l'invention,
- la figure 2 est un schéma d'un cycle de transmission d'une trame qui peut être précédé d'une étape d'initialisation selon l'invention,
- la figure 3 est un schéma du système OMAMRC de la figure 1 pour lequel toutes les sources sauf la source $s_1$ sont considérées comme correctement décodées,

## Description de modes de réalisation particuliers

Une utilisation du canal est la plus petite granularité en ressource temps-fréquence définit par le système qui permet la transmission d'un symbole modulé. Le nombre d'utilisations du canal est lié à la bande de fréquence disponible et à la durée de transmission.

Dans le cas « slow fading » privilégié dans la description, les gains d'évanouissement sont constants pendant les $M + T_{max}$ intervalles de temps où $M + T_{max}$ est le nombre maximal d'intervalles de temps pour accomplir un cycle de transmission.

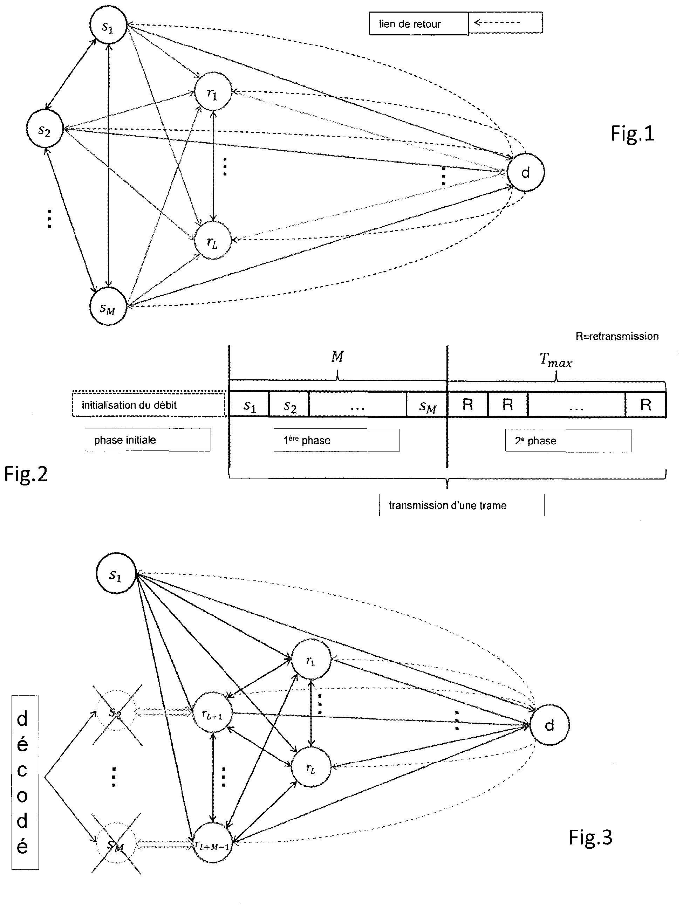

L'invention est décrite dans le contexte d'un système OMAMRC illustré par la figure 1. Ce système comprend M sources $\{s_1, ... , s_M\}$, L relais $\{r_1, ..., r_L\}$ et une destination $d$.

A titre de simplification de la description, les suppositions suivantes sont faites par la suite sur le système OMAMRC :

- les sources, les relais sont équipés d'une seule antenne d'émission ;
- les sources, les relais, et la destination sont équipés d'une seule antenne de réception ;
- les sources, les relais, et la destination sont parfaitement synchronisés ;
- les sources sont statistiquement indépendantes (il n'y a pas de corrélation entre elles), elles forment l'ensemble

$$\mathcal{S} = \{s_1, ..., s_M\} ;$$

- il est fait usage d'un code CRC supposé inclus dans les $K_{s_i}$ bits d'information de chaque source $s_i$ pour déterminer si un message est correctement décodé ou pas ;
- les liens entre les différents noeuds souffrent de bruit additif et d'évanouissement. Les gains d'évanouissement sont fixes pendant la transmission d'une trame effectuée pendant une durée maximale M + $T_{max}$ slots temporels, mais peuvent changer d'une trame à une autre. $T_{max} \geq 2$ est un paramètre du système ;
- la qualité du canal direct en réception (CSIR Channel State Information at Receiver selon la terminologie anglo-saxonne) est disponible à la destination, aux sources et aux relais ;
- les retours sont sans erreur (pas d'erreur sur les signaux de contrôle) ;
- la durée des slots temporels est variable.

Les noeuds relais comprennent les relais et les sources qui peuvent se comporter comme un relais quand elles n'émettent pas.

Les M sources et les L noeuds relais accèdent au canal de transmission selon un schéma d'accès multiple orthogonal qui leur permet d'écouter sans interférence les transmissions des autres sources et des autres noeuds relais.

La destination connaît les gains (CSI Channel State Information selon la terminologie anglosaxonne) des liens directs : $h = \{h_{S_1,D}, ..., h_{S_M,D}, h_{R_1,D}, ..., h_{R_L,D}\}$, c'est-à-dire des liens source vers destination et relais vers destination et peut donc en déduire les SNR moyens. Les sources et les relais transmettent à la destination une estimation de la qualité moyenne (SNR moyen) respectivement des liens entre sources et des liens sources vers relais avant la transmission d'une ou de plusieurs trames. La destination a ainsi une connaissance de tous les SNR moyens du système.

Pendant une phase initiale qui précède la transmission de plusieurs trames, la destination remonte pour chaque source un débit initial ou un schéma de modulation et de codage (MCS, Modulation and Coding Scheme selon la terminologie anglosaxonne) initial déterminé sur la base d'un SNR moyen de chacun des liens du système.

La statistique du canal de chaque lien est supposée suivre une distribution Gaussienne complexe circulaire centrée et les statistiques sont indépendantes entre les liens. Il est par suite suffisant de ne considérer que le SNR moyen comme mesure de la statistique d'un lien.

Chacun des débits initiaux détermine de manière non ambiguë un schéma de modulation et de codage MCS initial ou inversement chaque MCS initial détermine un débit initial.

Par exemple, le jeu des MCS comprend une modulation de type BPSK ou M-QAM avec $\{M = 4, 16, 64\}$. Pour une modulation BPSK, $M = 2$.

Le choix du MCS pour la source $s_i$ est tel que la modulation permet de mapper :

$$q_i = \log_2 M \text{ bits}/symbol \text{ (efficacité de la modulation ou modulation efficiency).}$$

Le jeu MCS comprend en outre différents rendements de codage, par exemple de 1/3 à 8/9. Le MCS ($r_i$, $q_i$) choisi pour la source $s_i$ comprend le rendement de codage $r_i$ et l'efficacité $q_i$ de la modulation.

Si la bande disponible pour la transmission pour le MCS choisi est $W_i$ alors le débit symboles transmis ne peut pas dépasser $W_i \times$ [symbols/s] pour éviter des interférences inter symboles, $s$ est l'abréviation de seconde.

Chaque symbole transmis représentant $q_i$ bits alors le débit des données ne peut pas dépasser $W_i q_i = W_i \log_2 M \times$ [bits/s]. Compte tenu de l'utilisation d'une correction d'erreur (FEC, Forward Error Correction selon la terminologie anglosaxonne) seule une part des $r_i$ bits est utile, i.e. les bits d'information. Ainsi, pour un MCS donné ($r_i$, $q_i$) le débit de données est déterminé par : $R_i = W_i q_i r_i \times$ [bits/s].

Par simplification, il est considéré dans la suite que la bande allouée pour chaque source est la même et égale à 1Hz. Ceci implique que le débit de données de la source $s_i$ est : $R_i = q_i r_i$.

Par exemple, le choix de la modulation de la source $s_i$ est 16-QAM et le rendement de codage est $r_i = 1/2$. Par suite, $q_i = \log_2 16 = 4 \left[\frac{\text{bits}}{symbol}\right]$ et le débit de données de la source $s_i$ est $R_i = q_i r_i = 2 \left[\frac{\text{bits}}{s}\right] (W_i = 1\text{Hz})$.

Chaque source transmet ses données mises en trame à la destination avec l'aide des autres sources et des relais.

Une trame occupe des slots temporels (time slots) lors de la transmission des M messages des respectivement $M$ sources. La durée maximale d'une trame est de $M + T_{max}$ slots temporels. Au sein d'une même trame, la transmission est divisée en deux phases.

La première phase comprend $M$ slots temporels pendant lesquels les sources $s_i$ émettent chacune à leur tour leur message à destination du destinataire $d$. Chaque slot temporel a une durée de $N_1$ utilisations du canal (channel uses).

Pendant cette première phase, chaque source

$$s_i \in \mathcal{S} = \{s_1, ..., s_M\}$$

transmet après codage un message $u_{s_i}$ comportant $K_{s_i}$ bits d'information, $u_{s_i} \in \mathbb{F}_2^{K_{s_i}}$, i ∈ {1,...,M}, $\mathbb{F}_2$ étant le corps de Galois à deux éléments. Le message $u_{s_i}$ comprend un code de type CRC qui permet de vérifier l'intégrité du message $u_{s_i}$. Le message $u_{s_i}$ est codé selon le MCS initial. Compte tenu que les MCS initiaux peuvent être différents entre les sources, les longueurs des messages codés peuvent être différentes entre les sources. Le codage utilise un code à redondance incrémentale. Le mot de code obtenu est segmenté en blocs de redondance. Le code à redondance incrémentale peut être de type systématique, les bits d'information sont alors inclus dans le premier bloc. Que le code à redondance incrémentale soit ou pas de type systématique, il est tel que le premier bloc peut être décodé de manière indépendante des autres blocs. Le code à redondance incrémentale peut être réalisé par exemple au moyen d'une famille finie de codes linéaires poinçonnés à rendements compatibles ou de codes sans rendement modifiés pour fonctionner avec des longueurs finies : code raptor (RC), turbo code poinçonné de rendement compatible (RCPTC rate compatible punctured turbo code selon la terminologie anglosaxonne), code convolutionnel poinçonné de rendement compatible (RCPCC rate compatible punctured convolutional code selon la terminologie anglosaxonne), LDPC de rendement compatible (RCLDPC rate compatible low density parity check code selon la terminologie anglosaxonne).

Chaque message transmis correspondant à une source $s_1$, ..., $s_M$, un message correctement décodé est assimilé à la source correspondante par abus de notation.

Lorsqu'une source émet, les autres sources, les relais ainsi que la destination écoutent et tentent de décoder les messages reçus à la fin de chaque slot. Le signal transmis par le noeud

$$a \in \mathcal{S}$$

est reçu par le noeud

$$b \in \mathcal{S} \cup \mathfrak{R} \cup \{d\}.$$

Le succès du décodage est décidé en utilisant le CRC.

La deuxième phase comprend au maximum $T_{max}$ slots temporels appelés rounds. Chaque round $t \in \{1, ..., T_{max}\}$ a une durée de $N_2$ utilisations du canal. Les $T_{max}$ slots sont décomposés en $X$ et $Y$ transmissions coopératives : $T_{max} = X + Y, X \geq 1, Y \geq 1$.

Pendant la deuxième phase, un noeud relais transmet i.e. il coopère en transmettant les mots ou une partie des mots qu'il a correctement décodés.

Par convention, on note

$$\mathcal{S}_{b,t} \subseteq \mathcal{S}$$

le jeu des messages (ou sources) correctement décodés par le noeud

$$b \in \mathcal{S} \cup \mathfrak{R} \cup \{d\}$$

à la fin de l'intervalle t (round t), $t \in \{0, ..., T_{max}\}$. La fin du round t = 0 correspond à la fin de la première phase.

Les $X$ transmissions coopératives peuvent se dérouler selon un mode dit aléatoire ou selon un mode dit de sélection. Les $Y$ transmissions coopératives se déroulent selon le mode dit de sélection.

Selon le mode dit aléatoire, les noeuds relais transmettent selon un ordre déterministe déterminé par exemple sous forme aléatoire. Ce mode a pour avantage de limiter très fortement les signaux de contrôle. La sélection intervient de la même façon dans chaque noeud relais en utilisant un générateur pseudo aléatoire alimenté avec le même aléa entre les noeuds relais. Selon ce mode, une source qui coopère pendant un round peut aider soit d'autres sources, soit elle-même, soit toutes les sources en transmettant un mot de code conjoint.

Selon le mode dit de sélection un noeud relais transmet uniquement s'il est sollicité par la destination. La destination décide donc du nombre de rounds et par suite de la durée de la seconde phase. Une source sélectionnée pendant cette phase agit donc comme un relais. Un signal de contrôle diffusé par le noeud

$$a \in \mathcal{S} \cup \mathfrak{R}$$

au début du round t identifie le jeu

$$\mathcal{S}_{a,t-1} \subseteq \{s_1, \ldots, s_M\}, 1 \le t \le T_{max},$$

$1 \le t \le T_{max}$, des messages (ou sources) correctement décodés par ce noeud à la fin du round t - 1. A la fin de la première phase, le jeu des messages (ou sources) correctement décodés par le noeud

$$a \in \mathcal{S} \cup \mathfrak{R} \cup \{d\}$$

est noté

$$\mathcal{S}_{a,0}.$$

Le jeu

$$\mathcal{S}_{a,0}$$

pour

$$a \in \mathcal{S} \cup \mathfrak{R}$$

est identifié dans un signal de contrôle émis par le noeud

$$a \in \mathcal{S} \cup \mathfrak{R}$$

diffusé au début du round t = 1. Selon ce mode de sélection, la destination $d$ sélectionne le noeud

$$\hat{a}_t \in \mathcal{S} \cup \mathfrak{R}$$

qui transmet au round t dans le but de décoder correctement un maximum de messages des sources.

La sélection effectuée par la destination au slot (round) courant *t* tient compte de sa connaissance des gains $\boldsymbol{h} = [h_{s_1,d}, \ldots, h_{s_M,d}, h_{r_1,d}, \ldots, h_{r_L,d}]$ et, en outre, du jeu de connaissance de ses sélections passées $\{\hat{a}_1, \ldots, \hat{a}_{t-1}\}$ et des jeux de messages décodés correctement par les noeuds précédemment sélectionnés (par abus de notation assimilés aux sources correspondantes)

$$\{\hat{\mathcal{S}}_{a_1,0}, \ldots \hat{\mathcal{S}}_{a_{t-1},t-2}\},$$

des jeux de messages

$$\mathcal{S}_{a,t-1}$$

décodés correctement par les noeuds

$$a \in \mathcal{S} \cup \mathfrak{R}$$

et transmis par les derniers signaux de contrôle reçus et du jeux de messages

$$\mathcal{S}_{d,t-1}$$

décodés correctement par la destination :

$$\mathcal{P}_{t-1} = \left\{\left(\hat{a}_1, \hat{S}_{a_1,0}\right), \dots, \left(\hat{a}_{t-1}, \hat{S}_{a_{t-1},t-2}\right)\right\} \cup \left\{\mathcal{S}_{a,t-1}, \forall a \in \mathcal{S} \cup \mathfrak{R} \cup\right.$$

$$\left.\{d\}\right\}.$$

Par convention le jeu de connaissance $\mathcal{P}_0$ rassemble uniquement

$$\left\{\mathcal{S}_{a,0}, \forall a \in \mathcal{S} \cup \mathfrak{R} \cup \{d\}\right\}$$

c'est-à-dire sa connaissance des jeux de messages décodés correctement par les sources et les relais à la fin de la première phase et sa connaissance du jeu de messages qu'elle a décodés correctement à l'issue de la première phase sur la base uniquement des signaux transmis par les sources.

Soit

$$E_t\left(a_t, \mathcal{S}_{a_t,t-1} \middle| \mathbf{h}, \mathcal{P}_{t-1}\right)$$

l'événement à la destination conditionné à la connaissance de $\mathbf{h}$ et de $\mathcal{P}_{t-1}$ indiquant qu'au moins une source n'est pas décodée correctement par la destination à la fin du slot (round) t au cours duquel le noeud $a_t$ est le noeud actif.

$$\mathcal{S}_{a_t,t-1}$$

est le jeu des sources aidées par le noeud

$$a_t \in \mathcal{S} \cup \mathfrak{R} \; .$$

$$E_t\left(a_t, \mathcal{S}_{a_t,t-1} \middle| \mathbf{h}, \mathcal{P}_{t-1}\right)$$

est appelé la probabilité commune de détection erronée (ou probabilité commune de coupure ou «common outage » selon la terminologie

$$O_{s,t}\left(a_t, \mathcal{S}_{a,t-1} \middle| \mathbf{h}, \mathcal{P}_{t-1}\right)$$

anglosaxonne) après le slot (round) t.

De manière similaire, soit l'événement à la destination conditionné à la connaissance de **h** et de $\mathcal{P}_{t-1}$ indiquant que la source

$$s \in \mathcal{S}$$

n'est pas décodée correctement par la destination à la fin du slot (round) t au cours duquel le noeud $a_t$ est le noeud actif.

$$\mathcal{S}_{a_t,t-1}$$

est le jeu des sources aidées par le noeud

$$a_t \in \mathcal{S} \cup \mathfrak{R}.$$

$$O_{s,t}\left(a_t, \mathcal{S}_{a_t,t-1}\middle|\mathbf{h}, \mathcal{P}_{t-1}\right)$$

est appelé la probabilité individuelle de détection erronée (ou probabilité individuelle de coupure ou «individual outage » selon la terminologie anglosaxonne) après le slot (round) t.

A chaque événement $A_t$ étant soit $E_t$ soit $O_{s,t}$, est associé la probabilité

$$A_t\left(\hat{a}_t, \hat{\mathcal{S}}_{a_t,t-1}\middle|\mathbf{h}, \mathcal{P}_{t-1}\right),$$

$Pr\{A_t\}$ qui peut formellement être définie comme

$$\mathbb{E}\left(\mathbf{1}_{\{A_t(\hat{a}_t, \hat{\mathcal{S}}_{a_t,t-1}|h,\mathcal{P}_{t-1})\}}\right)$$

avec $\mathbb{E}(\cdot)$ l'espérance et avec est vrai et égale à zéro si non. La

$$\mathbf{1}_{\{A_t(\hat{a}_t, \hat{\mathcal{S}}_{a_t,t-1}|h,\mathcal{P}_{t-1})\}} = 1 \;\; \text{si} \;\; A_t\left(\hat{a}_t, \hat{\mathcal{S}}_{a_t,t-1}\middle|h, \mathcal{P}_{t-1}\right)$$

probabilité $Pr\{A_t\}$ dépend des règles de sélection.

Le débit de transmission $\overline{R}_i$ atteint à long terme par chaque source $s_i$ i.e. le nombre de bits transmis pendant les utilisations du canal pendant une durée qui tend vers l'infini, peut être exprimé sous la forme :

$$\overline{R}_i = \frac{R_i}{M + \alpha \mathbb{E}(T)} \tag{1}$$

avec $\alpha = N_2/N_1$ et $\mathbb{E}(T)$ le nombre moyen de transmissions coopératives, $\mathbb{E}(T) = \sum_{t=1}^{T_{max}} t\, Pr\{T = t\}$, $T$ est le nombre de slots (round) conditionnel à **h** et aux règles de sélection. Ce nombre moyen est généralement différent entre les sources puisque les débits de transmission $R_i$ sont différents entre les sources.

Le débit radio est généralement défini comme le taux des messages transmis avec succès par un canal de transmission.

Ainsi, si la probabilité de coupure individuelle de la source $s_i$ après le nombre maximal $T_{max}$ de slots (rounds) est égale à $Pr\{O_{s_i}, T_{max}\}$ alors la fraction $(1 - Pr\{O_{s_i}, T_{max}\})$ de messages doit être correctement décodée.

Par suite, le débit radio de la source $s_i$ est égal à :

$$\eta_i = \bar{R}_i(1 - Pr\{O_{S_i}, T_{max}\})$$

Le débit radio agrégé à long terme peut être défini comme la somme de tous les débits radio individuels :

$$\eta = \sum_{s_i \in \mathcal{S}} \bar{R}_i(1 - Pr\{O_{s_i}, T_{max}\}) \tag{2}$$

L'efficacité spectrale est obtenue en divisant le débit radio par la bande utilisée $W_i$, cette bande est prise égale à 1Hz par simplification.

Les règles de sélection consistent donc à maximiser le débit agrégé défini par l'équation (2).

Selon le mode dit aléatoire, il n'y a pas de sélection par la destination pendant la durée *X*. La sélection est effectuée de manière déterministe en utilisant de la même manière pour chaque noeud relais un générateur aléatoire. La destination comprend le même générateur aléatoire pour connaître la séquence des sélections. En effet, il n'y a pas de signal de contrôle des noeuds relais à la destination pour lui indiquer quel noeud sélectionner. Si un signal de type ACK/NACK est remonté par la destination sous la forme d'un bit de retour (

$$\mathbf{1}_{\{A_t(\hat{a}_t, \hat{S}_{a_t, t-1} | h, \mathcal{P}_{t-1})\}}$$

) alors les transmissions coopératives sont stoppées dès que le bit vaut 1 i.e. correspond à un ACK commun.

Selon le mode dit de sélection, la destination indique en retour (feedback) le décodage correct des messages des sources via des canaux de contrôle limités. Chaque source et chaque relais informe la destination de son jeu de messages correctement décodés via des canaux de coordination descendant (forward selon la terminologie anglosaxonne). La destination ordonne une ou plusieurs transmissions coopératives tant que le nombre maximum n'est pas atteint pour minimiser la probabilité de coupure commune du système tout en cherchant à maximiser le débit agrégé. Le noeud relais sélectionné coopère en transmettant une information prenant en compte son jeu de messages correctement décodés.

Deux types de noeud relais sont considérés ci-après pour illustrer la probabilité de coupure commune.

Le premier type est dit DCC/JDCD, codage de canal distribué/décodage conjoint de canal distribué (distributed channel coding/joint distributed channel decoding selon la terminologie anglosaxonne). Le deuxième type est dit JNCC/JNCD, codage conjoint de réseau et de canal/décodage conjoint de réseau et de canal (joint network channel coding/joint network channel decoding selon la terminologie anglosaxonne).

L'information mutuelle instantanée entre le noeud

$$a \in \mathcal{S} \cup \mathfrak{R}$$

qui émet et le noeud

$$b \in \mathcal{S} \cup \mathfrak{R} \cup$$

$$\{d\}$$

qui reçoit est notée $I_{a,b}$. Cette information mutuelle dépend du gain du canal $h_{a,b}$, du SNR du lien entre les noeuds *a* et *b* et de l'hypothèse de modulation à l'entrée du canal. Dans la suite, les dépendances à *h* et à $\mathcal{P}_{t-1}$ sont omises dans les expressions de $E_t$ et de $O_{s,t}$ pour alléger la présentation.

Pour le type DCC/JDCD, il n'y a pas de codage réseau, le signal représentatif émis par le noeud relais sélectionné $\hat{a}_t$ est une concaténation de messages décodés correctement et qui correspondent chacun à une source décodée correctement.

L'événement de coupure commune

$$E_t(a_t, S_{a,t-1})$$

à l'issue du slot (round) $t$ pour une sélection d'un noeud coopératif $a_t$ peut s'exprimer sous la forme :

$$E_t\big(a_t, S_{a,t-1}\big) = \bigcup_{s \in \bar{S}_{d,t-1}} \{R_s > I_t^s(a_t, S_{a_t,t-1})\} \tag{3}$$

avec

$$I_t^s\big(a_t, S_{a_t,t-1}\big) = I_{s,d} + \sum_{l=1}^{t-1} \frac{\alpha}{\big|\hat{S}_{a_l,l-1}\big|} I_{\hat{a}_l,d} \mathbf{1}_{\{s \in \hat{S}_{a_l,l-1}\}} + \frac{\alpha}{\big|S_{a_t,t-1}\big|} I_{a_t,d} \mathbf{1}_{\{s \in S_{a_t,t-1}\}} \tag{4}$$

et avec

$$\bar{S}_{d,t-1} = S \backslash S_{d,t-1}$$

le complément de

$$S_{d,t-1}$$

dans l'ensemble des sources.

L'événement de coupure individuel

$$O_{s,t}\big(a_t, S_{a,t-1}\big)$$

peut être exprimé de manière similaire sous la forme :

$$O_{s,t}\big(a_t, S_{a,t-1}\big) = \big\{R_s > I_t^s(a_t, S_{a_t,t-1})\big\} \tag{5}$$

Dans l'expression (4), $I_{s,d}$ représente l'information mutuelle entre la source s et la destination $d$ intervenue lors de la transmission pendant la première phase. $I_{\hat{a}_l,d}$ représente l'information mutuelle entre le noeud $\hat{a}_l$ sélectionné lors du slot (round) $l \in \{1,..., t - 1\}$ de la seconde phase et la destination $d$. Cette information mutuelle n'est prise en compte que si la source s est décodée avec succès par le noeud $\hat{a}_l$ d'où l'origine de la fonction

$$\mathbf{1}_{\{s \in \hat{S}_{a_l,l-1}\}}.$$

$a_t$ représente le noeud qui va

$$\big|\hat{S}_{a_l,l-1}\big|$$

être choisi lors du slot (round) $t$. La division par vient de la nature du codage distribué selon lequel tous les intervalles disponibles du canal sont divisés en parts égales et allouées aux mots de code individuels du code distribué (par exemple si le code distribué consiste en cinq mots de code différents (

$$\big|\hat{S}_{a_l,l-1}\big| = 5$$

) alors chacun des mots de code utilise 1/5 des utilisations de canal disponibles). La multiplication par $\alpha$ sert à normaliser avant de pouvoir additionner deux informations mutuelles générées lors de deux phases différentes (la transmission intervient pendant $N_1$ utilisations du canal lors de la première phase et pendant $N_2$ utilisations du canal lors de la deuxième phase).

Pour une sélection donnée du noeud relais coopératif $a_t$ et du jeu

$$\mathcal{S}_{a_t,t-1}$$

des sources avec lequel il coopère, l'événement de coupure individuelle à l'issue du slot (round) $t$ selon l'expression (5) signifie que cet événement intervient quand le débit de la source s est supérieur à l'information mutuelle accumulée. Cette information mutuelle croît après chaque transmission éventuelle pendant la deuxième phase (l'information mutuelle au temps t est celle au temps $t$ - 1 plus la contribution du noeud coopératif au slot (round) $t$). Si cet événement intervient alors ceci signifie que la source s ne peut pas être décodée sans erreur.

Pour le choix donné du noeud coopératif $a_t$ et du jeu

$$\mathcal{S}_{a_t,t-1}$$

des sources avec lequel il coopère, l'événement de coupure commune à l'issue du slot (round) $t$ selon l'expression (3) intervient si, pour au moins une source s du jeu des sources décodées sans succès

$$\bar{\mathcal{S}}_{d,t-1}$$

par la destination à l'issue du slot (round) t - 1, l'information mutuelle accumulée

$$I_t^s(a_t, \mathcal{S}_{a_t,t-1})$$

de cette source s est plus petite que son débit de transmission $R_s$. Cet événement intervient donc dès qu'une source s ne peut pas être décodée sans erreur.

Pour le type JNCC/JNCD, la séquence transmise par le noeud relais sélectionné $\hat{a}_l$ et les messages transmis par les sources correspondant au jeu $\hat{\mathcal{S}}_{a_l,l-1}$ des sources sélectionnées avec lequel il coopère forment un mode de code conjoint des messages des sources $\hat{\mathcal{S}}_{a_l,l-1}$, $l \in \{1, ..., t\text{-}1\}$. Il en est de même pour le noeud relais candidat $a_t$ et le jeu

$$\mathcal{S}_{a_t,t-1}$$

des sources sélectionnées avec lequel il coopère pour le round $t$.

Dans ce cas, il y a déclaration d'une coupure commune (common outage) si le vecteur de débits de transmission $(R_1, R_2, ..., R_M)$ est dans une région externe à la région de capacité.

Pour une transmission montante à $M$ - *utilisateurs,* la région de capacité est décrite par $2^M$ - 1 inégalités, chacune correspondant à un sous-ensemble des $M$ utilisateurs. Par exemple, dans le cas d'un canal montant AWGN, ces inégalités sont :

$$\sum_{k \in W} R_k < \log\left(1 + \frac{\sum_{k \in W} P_k}{N_0}\right) \ \ \forall W \subset \{1, ..., M\}$$

avec $P_k$ la puissance reçue par l'utilisateur k.

L'événement de coupure commune

$$E_t(a_t, \mathcal{S}_{a,t-1})$$

à l'issue du slot (round) t pour une sélection d'un noeud coopératif $a_t$ est défini sous la forme d'une union de fonctions indicatives

$$2^{\bar{S}_{d,t-1}} - 1$$

telle que cette union a la valeur un si l'une des fonctions est égale à un :

$$\mathrm{E}_t\big(a_t, S_{a_t,t-1}\big) = \bigcup_{U \subseteq \bar{S}_{d,t-1}} \mathcal{F}_{d,\bar{S}_{d,t-1}}(\mathcal{U}), \tag{6}$$

où :

$$\mathcal{F}_{d,\bar{S}_{d,t-1}}(\mathcal{U}) = \left\{ \sum_{s \in \mathcal{U}} R_s > \sum_{s \in \mathcal{U}} I_{s,d} + \sum_{l=1}^{t-1} \alpha \, I_{\hat{a}_l,d} \mathbf{1}_{\{\mathcal{U} \cap \hat{S}_{a_l,l-1} \neq \emptyset\}} + \alpha I_{a_t,d} \mathbf{1}_{\{\mathcal{U} \cap S_{a_t,t-1} \neq \emptyset\}} \right\} \tag{7}$$

$I_{s,d}$, $I_{\hat{a}_l,d}$, $I_{a_t,d}$ et $\alpha$ ont la même définition que dans l'équation (4).

Les arguments des fonctions indicatives

$$\mathbf{1}_{\{\mathcal{U} \cap \hat{S}_{a_l,l-1} \neq \emptyset\}}$$

et

$$\mathbf{1}_{\{\mathcal{U} \cap S_{a_t,t-1} \neq \emptyset\}}$$

ont pour objectif de vérifier si le noeud sélectionné a réussi à décoder au moins une source du jeu $\mathcal{U}$.

L'événement de coupure individuel à l'issue du slot (round) $t$ pour une

$$\mathrm{O}_{s,t}\big(a_t, S_{a,t-1}\big)$$

sélection d'un noeud coopératif $a_t$ peut être exprimé de manière similaire sous la forme :

$$\mathrm{O}_{s,t}\big(a_t, S_{a_t,t-1}\big) = \bigcap_{\mathfrak{X} \subset \bar{S}_{d,t-1}} \bigcup_{\mathcal{U} \subseteq \bar{\mathfrak{X}}: s \in \mathcal{U}} \left\{ \sum_{s \in \mathcal{U}} R_s > \sum_{s \in \mathcal{U}} I_{s,d} + \sum_{l=1}^{t-1} \alpha \, I_{\hat{a}_l,d} \mathbf{1}_{\{\hat{C}_{l,s}\}} + \alpha I_{a_t,d} \mathbf{1}_{\{C_{t,s}\}} \right\} \tag{8}$$

où les sources appartenant à $\mathfrak{X}$ sont considérées comme des interférences,

$$\bar{\mathfrak{X}} = \bar{S}_{d,t-1} \backslash \mathfrak{X}$$

et

$$\hat{C}_{l,s} = \left\{ \{ s \in \mathcal{U} \cap \hat{S}_{a_l,l-1} \} \wedge \{ \hat{S}_{a_l,l-1} \cap \mathfrak{X} = \emptyset \} \right\}$$

$$C_{t,s} = \left\{ \left\{ s \in \mathcal{U} \cap \mathcal{S}_{a_t,t-1} \right\} \wedge \left\{ \mathcal{S}_{a_t,t-1} \cap \mathfrak{T} = \emptyset \right\} \right\}$$

La maximisation des débits cumulés sous contrainte de la probabilité de coupure commune cible $\varepsilon_{com}$ peut ainsi s'exprimer sous la forme :

$$\max \sum_{i=1}^{|\mathcal{S}|} R_i$$

sous contrainte que :

$$\Pr \left\{ \bigcup_{\mathcal{U} \subseteq \mathcal{S}} \left\{ \sum_{s \in \mathcal{U}} R_s > \sum_{s \in \mathcal{U}} I_{s,d} + \sum_{l=1}^{X} \alpha \, I_{\hat{a}_l,d} \mathbf{1}_{\left\{ \mathcal{U} \cap \hat{\mathcal{S}}_{a_l,l-1} \neq \emptyset \right\}} \right\} \right\} \leq \varepsilon_{com} \quad (9)$$

Selon un mode de réalisation du procédé, l'étape d'initialisation est basée sur l'hypothèse que toutes les sources $\{s_1, s_2, ..., s_{i-1}, s_{i+1}, ..., s_M\}$ sauf la source $s_i$ dont on veut initialiser le débit sont considérées comme correctement décodées. Le système correspondant est illustré par le schéma de la figure 3 lorsque $s_i = s_1$. Toutes les sources $\{s_1, s_2, ..., s_{i-1}, s_{i+1}, ..., s_M\}$ autres que $s_i$ agissent comme des relais notés $\{r_{L+1}, ..., r_{L+M-1}\}$. Pour la source $s_i$ considérée, le réseau est un réseau à relais multiples noté $(1, L + M - 1, 1)$ et non plus un réseau à relais multiples et utilisateurs multiples.

En outre, selon ce mode les noeuds relais sont sélectionnés de manière aléatoire lors des $X$ transmissions coopératives.

Selon ce mode, seules les probabilités de coupure individuelles sont à considérer. La probabilité de coupure commune peut en être déduite directement puisque les transmissions des sources sont indépendantes i.e. $\varepsilon_{com} = 1 - (1 - \varepsilon_{ind})^M \approx M\varepsilon_{ind}$.

Le BLER cible $\varepsilon_{com}$ est décliné en $M$ BLER cible. Pour la source dont on veut initialiser le débit, le BLER cible est supposé inférieur ou égale à $\varepsilon_{com}/M$.

Selon ce mode, la maximisation des débits cumulés revient à maximiser successivement le débit de chaque source $s_i$ en considérant que les messages de toutes les autres sources ont été décodés correctement et que ces sources se comportent uniquement comme des relais :

$$\max_{R_i} \left\{ \int \left[ R_i > I_{s_i,d} + \sum_{l=1}^{X} \alpha \, I_{\hat{a}_l,d} \mathbf{1}_{\left\{ s_i \in \hat{\mathcal{S}}_{a_l,l-1} \right\}} \right] P(\boldsymbol{H}) \, d\boldsymbol{H} \leq \frac{\varepsilon_{com}}{M} \right\} \quad (10)$$

En effectuant des tirages aléatoires selon une méthode dite Monte-Carlo pour sélectionner aléatoirement les différents noeuds relais activés pendant les $X$ transmissions coopératives, il est possible de déterminer la valeur moyenne de l'intégrale de l'inégalité (10) pour le débit candidat $R_g$. Ainsi, pour déterminer le débit maximum que la source $s_i$ peut utiliser, le déroulement peut-être le suivant :

1. sélectionner de manière séquentielle le premier débit candidat $R_g$ possible qui n'a pas encore été considéré dans le jeu $\{R_1, ..., R_{nMCS}\}$. Si tous les débits ont été considérés aller à l'étape 10.
2. initialiser le compteur $cnt$ de la réalisation courante d'une simulation Monte-Carlo : $cnt = 0$. Initialisation du compteur $out$ des réalisations Monte-Carlo (de matrice de canaux $\boldsymbol{H}$ et de $X$ noeuds relais) qui conduisent à une coupure : $out = 0$.
3. incrémenter le compteur $cnt$ de un.
Si $cnt \leq$ max_$cnt$ avec max_$cnt$ le nombre maximum de réalisations Monte-Carlo, par exemple max_$cnt = 1000$ alors :

    a. déterminer de manière aléatoire $X$ noeuds relais parmi le jeu $\{r_1, ..., r_{L+M-1}\}$ de noeuds relais et noter les $r'_x$, $x = \{1, ..., X\}$,
    b. déterminer $\boldsymbol{H}$ sur la base de $P(\boldsymbol{H})$ la probabilité conjointe des réalisations des canaux de tous les liens $h_{a,b}$.
    Si non ($cnt >$ max_$cnt$) aller à l'étape 9.

4. calculer $I_{s_i,d}$ et déterminer le jeu de décodage de la destination de la manière suivante :

a. si $R_i \leq I_{s_i,d}$ alors

$$\mathcal{S}_{d,0} = \{s_i\},$$

retourner à l'étape 3 (pas de changement de la valeur du compteur out).

b. si non $(R_i > I_{s_i,d})$ alors

$$\mathcal{S}_{d,0} = \emptyset.$$

5. initialiser le compteur du round courant à $x = 1$

6. calculer $I_{s_i,r'_x}$ . Si $x > 1$, calculer $I_{r'_j,r'_x}$ entre chacun des relais choisis lors du précédent round et le relais $r'_x$, $\forall j \in \{1, ..., x - 1\}$ , (en prenant en compte le jeu de décodage après le round $j$ - 1 pour le relais $r'_j$ ).

7. déterminer le jeu de décodage du relais $r'_x$ après le round $x$ - 1 de la manière suivante :

a. si

$$R_i \leq \left( I_{s_i,r'_x} + \sum_{j=1}^{x-1} \alpha I_{r'_j,r'_x} \mathbf{1}_{\left\{ s_i \in \mathcal{S}_{r'_j,j-1} \right\}} \right)$$

alors

$$\mathcal{S}_{r'_x,x-1} = \{s_i\}.$$

b. si non alors

$$\mathcal{S}_{r'_x,x-1} = \emptyset.$$

8. déterminer le jeu de décodage de la destination après le round $x$ de la manière suivante :

a. si

$$R_i \leq \left( I_{s_i,d} + \sum_{j=1}^{x} \alpha I_{r'_j,d} \mathbf{1}_{\left\{ s_i \in \mathcal{S}_{r'_j,j-1} \right\}} \right)$$

alors

$$\mathcal{S}_{d,x} = \{s_i\},$$

retourner à l'étape 3.

b. si non, aucune source n'est décodée par la destination :

$$S_{d,x} = \emptyset.$$

Si le nombre maximum de retransmissions n'est pas atteint : $x < X$ alors incrémenter $x$ de un et retourner à l'étape 6.

Si non ($x = X$) alors out = out + 1, retourner à l'étape 3.

9. déterminer la probabilité de coupure moyenne de la source $s_i$ pour le débit $R_g$ comme étant (en résolvant l'intégrale de l'inégalité (10) en utilisant les simulations Monte-Carlo) :

$$P_{s_i,R_g}^{out} = \frac{out}{max\_cnt}$$

retourner à l'étape 1.

10. choisir le débit maximum $R_i$ que la source $s_i$ peut utiliser :

$$R_i = \max R_g \text{ tel que } P_{s_i,R_g}^{out} < \frac{\varepsilon_{com}}{M}$$

Les étapes de 1 à 10 sont répétées pour chacune des autres sources $s_i$ pour déterminer chacun des débits $R_i$.

Les $M$ débits pris ensemble peuvent ensuite être diminués ou augmentés simultanément en utilisant une méthode de Newton. Ainsi, si la détermination du membre de gauche de l'inégalité (9) conduit à un résultat supérieur ou inférieur à la probabilité de coupure commune cible $\varepsilon_{com}$ il est possible de respectivement diminuer ou augmenter tous les débits simultanément jusqu'aux débits respectivement juste inférieurs ou juste supérieurs dans le cas d'un nombre fini de MCSs disponibles. Cette diminution ou augmentation est répétée jusqu'à conduire à un résultat inférieur à la probabilité de coupure commune cible $\varepsilon_{com}$ de telle manière que l'augmentation des débits conduise à une probabilité de coupure commune supérieure à $\varepsilon_{com}$.

Au final, la somme des débits a été maximisée sous contrainte de la probabilité de coupure commune cible $\varepsilon_{com}$.

La probabilité de coupure commune $\varepsilon_{com}$ peut en outre éventuellement être affinée pour tendre vers une solution optimale.

Les débits ayant été initialisés, par exemple selon le mode décrit précédemment, les sources $s_i$ émettent pendant la 1<sup>ère</sup> phase chacune à leur tour leur message avec leur débit initial à destination du destinataire. A réception, la destination tente de décoder les messages reçus. Généralement, tous les messages ne sont pas décodés correctement par la destination à l'issue de la 1<sup>ère</sup> phase d'où l'intérêt de la 2<sup>nde</sup> phase.

Lors de la 2<sup>nde</sup> phase, il y a une transmission coopérative par un ou par plusieurs dispositifs pris parmi les sources et les relais. Une source peut ainsi coopérer avec elle-même mais en outre avec une ou plusieurs sources.

Selon un mode de réalisation, dite à haute charge de signalisation, la maximisation du débit défini par l'équation (1) est obtenue en minimisant la probabilité de coupure commune $\Pr\{E_t\}$ à chaque round $t$ en sélectionnant le noeud relais approprié connaissant le canal $h$ et conditionnel à $P_{t-1}$. Compte tenu que pour toute source $s \in S$ $\Pr\{O_{s,T_{max}}\} \leq \Pr\{E_{T_{max}}\}$ et que $\Pr\{E_t\} \leq \Pr\{E_{t-1}\}$ alors ce mode doit conduire à une amélioration du débit radio agrégé à long terme donné par (2).

Selon ce mode, si la destination décode correctement tous les messages elle transmet un message commun ACK. La transmission d'une nouvelle trame débute à réception de cet ACK. Si la destination ne décode pas correctement tous les messages elle transmet un message commun NACK sous la forme par exemple d'un bit au début de chaque round $t \in \{1,..., T_{max}\}$. En réponse, les noeuds relais transmettent à la destination une mise à jour de leur jeu de messages décodés correctement sous la forme par exemple de $M + L$ bits. Chaque noeud relais peut coopérer avec son propre jeu de messages décodés correctement. La destination transmet ensuite $\lceil \log_2(M + L) \rceil$ bits pour une sélection d'un noeud relais coopératif. Le noeud relais sélectionné est celui qui minimise la probabilité commune de coupure et qui de manière générale conduit au plus petit nombre de rounds utilisés dans cette phase. De cette manière, le débit de transmission à long terme de chaque source est augmenté et par conséquent le débit radio agrégé à long terme est lui-aussi augmenté. Compte tenu des relations (6) et (7), le noeud relais sélectionné est celui qui minimise la probabilité $\Pr\{E_t\}$ de l'événement

$$E_t\big(a_t, S_{a_t,t-1}\big).$$

Ce qui est équivalent à sélectionner le noeud qui maximise simultanément les (

$$2^{|\bar{S}_{d,t-1}|} - 1$$

) quantités d'informations mutuelles de la partie droite de la relation (7). La mise en oeuvre de la sélection pouvant être complexe, plusieurs réalisations simples sont décrites.

Une première réalisation considère un message ACK/NACK commun et une sélection d'un noeud relais basée sur l'information mutuelle.

Selon cette réalisation, seul un sous-jeu $\mathcal{U}$ est considéré dans l'équation (6). Ce sous-jeu est celui qui comprend toutes les sources du jeu des sources non correctement décodées par la destination i.e.

$$\mathcal{U}' = \bar{S}_{d,t-1}.$$

Ainsi, au début du round *t*, la destination choisi le noeud coopératif

$$a_t \in \mathcal{S} \cup \mathfrak{N}$$

qui maximise :

$$\hat{a}_t = \operatorname*{argmax}_{a_t \in \mathcal{S} \cup \mathfrak{N}} \left\{ \sum_{s \in \bar{S}_{d,t-1}} I_{s,d} + \sum_{l=1}^{t-1} \alpha\, I_{\hat{a}_l,d} \mathbf{1}_{\left\{\bar{S}_{d,t-1} \cap \hat{S}_{a_l,l-1} \neq \emptyset\right\}} + \alpha I_{a_t,d} \mathbf{1}_{\left\{\bar{S}_{d,t-1} \cap S_{a_t,t-1} \neq \emptyset\right\}} \right\}$$

$$= \operatorname*{argmax}_{a_t \in \mathcal{S} \cup \mathfrak{N}} \left\{ I_{a_t,d} \mathbf{1}_{\left\{\bar{S}_{d,t-1} \cap S_{a_t,t-1} \neq \emptyset\right\}} \right\} \tag{11}$$

Compte tenu que le choix de $a_t$ n'influence pas les deux premiers membres de la partie droite de l'inégalité (7) alors le problème de maximisation peut être transformé en une maximisation du troisième membre :

$$\alpha I_{a_t,d} \mathbf{1}_{\left\{\mathcal{U} \cap S_{a_t,t-1} \neq \emptyset\right\}}.$$

Un tel choix de $\mathcal{U}'$ revient à effectuer une sélection du noeud avec l'information $I_{a_t,d}$ la plus grande parmi tous les noeuds qui sont capables de décoder au moins une source parmi le jeu des sources non décodées correctement par la destination. Ce choix garanti que dans toutes les inégalités dans lesquelles

$$\mathcal{U} \cap S_{a_t,t-1} \neq \emptyset$$

(pour tous les $\mathcal{U}$ autres que $\mathcal{U}'$) le noeud sélectionné est aussi le meilleur.

Une deuxième réalisation considère un message ACK/NACK commun et une sélection d'un noeud relais basée sur le produit d'informations mutuelles et sur la cardinalité du jeu de décodage.

Selon cette réalisation, la sélection porte sur le noeud avec le produit le plus

$$I_{a_t,d} \times \left| S_{a_t,t-1} \right|$$

grand. Ce produit est un bon indicateur conjoint de l'information mutuelle $I_{a_t,d}$ et de la cardinalité du jeu de décodage

$$\left| S_{a_t,t-1} \right|.$$

Une troisième réalisation considère un message ACK/NACK commun et une sélection d'un noeud relais basée sur une prédiction des sources décodées.

Selon cette réalisation, à chaque round, la destination examine séquentiellement les sources de $s_1$ à $s_M$ et puis les relais de $r_1$ à $r_L$. Pour chaque noeud $a_t$ parmi ces noeuds et à condition que

$$\bar{\mathcal{S}}_{d,t-1} \cap \mathcal{S}_{a_t,t-1} \neq \emptyset$$

la destination essaye de déterminer combien de sources elle pourrait décoder en plus du précédent round si ce noeud était sélectionné.

A cette fin, pour chacun de ces noeuds $a_t$ la destination vérifie pour chaque source

$$\in \bar{\mathcal{S}}_{d,t-1}$$

si l'événement de coupure individuelle

$$O_{s,t}\big(a_t, \mathcal{S}_{a_t,t-1}\big)$$

après le round $t$ est vrai ou pas. Ensuite, la destination compte le nombre des événements de coupure individuelle égaux à zéro (i.e. faux) pour obtenir le nombre de sources pouvant être nouvellement correctement décodées. La destination choisi alors le noeud $a_t$ qui conduit au plus grande nombre de sources nouvellement décodées. Si plusieurs noeuds conduisent au même nombre la destination choisi l'un d'eux de manière aléatoire.

Selon une alternative moins coûteuse en nombre d'opérations, la destination vérifie les événements de coupure commune des sous-jeux du jeu de décodage

$$\bar{\mathcal{S}}_{d,t-1}.$$

Pour qu'un jeu de sources soit le jeu

$$\mathcal{S}_d$$

de décodage de la destination, il faut que : (i) l'accès au canal des

$$|\mathcal{S}_d|.$$

-utilisateurs en considérant les sources de

$$\mathcal{S} \backslash \mathcal{S}_d$$

comme des interférences ne soit pas en coupure commune et (ii) que pour tous les sous-jeux

$$\mathcal{S}'_d$$

qui incluent

$$\mathcal{S}_d \ (\mathcal{S}_d \subset \mathcal{S}'_d)$$

que l'accès au canal par les

$$|\mathcal{S}'_d|$$

-utilisateurs soit en coupure. $\mathcal{B}_j^{(i)}$ est le jième sous-jeu de

$$\bar{\mathcal{S}}_{d,t-1}$$

de cardinalité i avec

$$j \in \left\{ 1, \dots, \binom{|\bar{\mathcal{S}}_{d,t-1}|}{i} \right\}$$

(il y a un total de (

$$\binom{|\bar{\mathcal{S}}_{d,t-1}|}{i}$$

) sous-jeux de cardinalité i dans le jeu

$$\bar{\mathcal{S}}_{d,t-1}$$

).

Selon cette alternative, la destination part du sous-jeu le plus grand du jeu de décodage

$$\bar{\mathcal{S}}_{d,t-1}$$

noté

$$\mathcal{B}_1^{(|\bar{\mathcal{S}}_{d,t-1}|)}.$$

. Puis elle vérifie si l'événement de coupure commun après le round *t* est vrai ou pas. S'il est faux ceci signifie que ce sous-jeu est le jeu de décodage :

$$\mathcal{B}_1^{(|\bar{\mathcal{S}}_{d,t-1}|)} = \bar{\mathcal{S}}_{d,t-1}$$

i.e. le nombre de sources nouvellement décodées en choisissant le noeud $a_t$ est :

$$v(a_t) = |\bar{\mathcal{S}}_{d,t-1}|.$$

Si l'événement de coupure commun est vrai le jeu observé

$$\mathcal{B}_1^{(|\bar{\mathcal{S}}_{d,t-1}|)}$$

est réduit d'une source, en partant de la source $s_1$, et la destination vérifie si le même événement pour le nouveau sous-jeu

$$\mathcal{B}_1^{(|\bar{\mathcal{S}}_{d,t-1}|-1)} = \bar{\mathcal{S}}_{d,t-1} \backslash s_1$$

est vrai ou pas. Tant que l'événement est vrai la vérification est effectué pour un autre sous-jeu avec

$$j \in \{2, \ldots, |\bar{\mathcal{S}}_{d,t-1}|\}.$$

$$\mathcal{B}_j^{(|\bar{\mathcal{S}}_{d,t-1}|-1)} = \bar{\mathcal{S}}_{d,t-1} \backslash s_j$$

S'il y a au moins un sous-jeu

$$\mathcal{B}_j^{(|\bar{\mathcal{S}}_{d,t-1}|-1)}, \ j \in \{1, \ldots, |\bar{\mathcal{S}}_{d,t-1}|\}$$

pour lequel l'événement de coupure commune est faux alors

$$v(a_t) = |\bar{\mathcal{S}}_{d,t-1}| - 1.$$

Si non, le jeu observé

$$\mathcal{B}_1^{(|\bar{\mathcal{S}}_{d,t-1}|)}$$

est réduit de deux sources ou le sous-jeu

$$\mathcal{B}_j^{(|\bar{\mathcal{S}}_{d,t-1}|-1)}$$

réduit séquentiellement d'une source du jeu

$$\bar{\mathcal{S}}_{d,t-1}$$

pour obtenir les sous-jeux S'il y a au moins un sous-jeu

$$\mathcal{B}_{j'}^{(|\bar{\mathcal{S}}_{d,t-1}|-2)}$$

$$\mathcal{B}_{j'}^{(|\bar{\mathcal{S}}_{d,t-1}|-2)}, j' \in \left\{1, \ldots, \binom{|\bar{\mathcal{S}}_{d,t-1}|}{2}\right\}.$$

pour lequel l'événement de coupure commune est faux alors

$$v(a_t) = |\bar{\mathcal{S}}_{d,t-1}| - 2.$$

Si non, le jeu observé est réduit de trois sources et l'événement de coupure commune vérifiée et ainsi de suite pour des sous-jeux observés de cardinalité

$$\left|\bar{\mathcal{S}}_{d,t-1}\right| - n,$$

$n$ = 4, 5, ....Dans le pire des cas, la cardinalité des sous-jeux observés

$$\mathcal{B}_j^{(1)}, j \in \left\{1, \dots, \left|\bar{\mathcal{S}}_{d,t-1}\right|\right\}$$

est un et $v(a_t)$ = 1 *ou* 0.

Vérifier (ii) si l'événement de coupure commune est vrai pour des sous-jeux $\mathcal{B}$ du jeu

$$\bar{\mathcal{S}}_{d,t-1}$$

(

$$\forall \mathcal{B} \subseteq \bar{\mathcal{S}}_{d,t-1}$$

) des sources non décodées par la destination est équivalent à vérifier si le vecteur de débit de ce sous-jeu est localisé en dehors de la région de capacité du lien montant des $|\mathcal{B}|$ - utilisateurs. La considération de la région de capacité des $|\mathcal{B}|$ -utilisateurs accédant selon un accès multiple au canal ( $|\mathcal{B}|$ -user MAC) nécessite de considérer d'autres sources d'interférences. Le jeu de sources d'interférences est noté

$$\mathfrak{I} = \bar{\mathcal{S}}_{d,t-1} \backslash \mathcal{B}.$$

Un accès multiple au canal avec le sous-jeu $\mathcal{B}$ de sources en considérant les autres sources comme des interférences est noté par la suite $|\mathcal{B}|$ -utilisateurs MAC réduit ( $|\mathcal{B}|$ -user reduced MAC). Les expressions (6) et (7) ne peuvent pas être utilisées pour calculer l'événement de coupure commune du sous-jeu $\mathcal{B}$ puisqu'aucun jeu de sources interférentes n'y est considéré. En effet, les expressions (6) et (7) sont relatives à la région de capacité du jeu complet

$$\bar{\mathcal{S}}_{d,t-1},$$

i.e.

$$\left|\bar{\mathcal{S}}_{d,t-1}\right|$$

-utilisateurs en accès multiple au canal (

$$\left|\bar{\mathcal{S}}_{d,t-1}\right|$$

-user MAC). L'expression à prendre en compte pour l'événement de coupure commune du sous-jeu $\mathcal{B}$ est la suivante :

$$E_{t,\mathcal{B}}(a_t, \mathcal{S}_{a_t,t-1}) = \bigcup_{\mathcal{U} \subseteq \mathcal{B}} \mathcal{F}_{d,\mathcal{B}}(\mathcal{U}), \qquad (12)$$

$$\mathcal{F}_{d,\mathcal{B}}(\mathcal{U}) = \left\{ \sum_{s \in \mathcal{U}} R_s > \sum_{s \in \mathcal{U}} I_{s,d} + \sum_{l=1}^{t-1} \alpha\, I_{\hat{a}_l,d} \mathbf{1}_{\{\hat{C}_{l,s}\}} + \alpha I_{a_t,d} \mathbf{1}_{\{C_{t,s}\}} \right\}$$

avec

$$(13)$$

$$\hat{C}_{l,s} = \left\{ \{ s \in \hat{\mathcal{S}}_{a_l,l-1} \cap \mathcal{U} \} \wedge \{ \hat{\mathcal{S}}_{a_l,l-1} \cap \mathcal{I} = \emptyset \} \right\}$$

$$C_{t,s} = \left\{ \{ s \in \mathcal{S}_{a_t,t-1} \cap \mathcal{U} \} \wedge \{ \mathcal{S}_{a_t,t-1} \cap \mathcal{I} = \emptyset \} \right\}$$

Dit autrement, selon cette alternative la destination effectue les opérations suivantes :

1. initialisation d'une variable i dénotant la cardinalité du jeu $\mathcal{B}$ observé à :

$$i =$$

$$\left| \bar{\mathcal{S}}_{d,t-1} \right|.$$

Pour chaque noeud relais $a'_t \in \{ s_1, \ldots, s_M, r_1, \ldots, r_L \}$ initialiser $v(a'_t) = 0$.

2. De manière séquentielle, prendre le noeud $a_t$ coopérant candidat potentiel suivant pas encore considéré du jeu $\{ s_1, \ldots, s_M, r_1, \ldots, r_L \}$ et pour lequel

$$\bar{\mathcal{S}}_{d,t-1} \cap \mathcal{S}_{a_t,t-1} \neq \emptyset.$$

Si le noeud $r_L$ a été considéré alors aller à l'étape 5. Si non aller à l'étape suivante.

3. au round i calculer la fonction

$$\mathrm{E}_{t,\mathcal{B}_j^{(i)}}\left( a_t, \mathcal{S}_{a_t,t-1} \right)$$

pour chaque

$$j \in \left\{ 1, \ldots, \binom{\left| \bar{\mathcal{S}}_{d,t-1} \right|}{i} \right\}$$

en utilisant les relations (14) et (15).

4. Si

$$\mathrm{E}_{t,\mathcal{B}_j^{(i)}}\left( a_t, \mathcal{S}_{a_t,t-1} \right) = 1$$

pour chaque

$$j \in \left\{ 1, \ldots, \binom{\left| \bar{\mathcal{S}}_{d,t-1} \right|}{i} \right\}$$

alors :

a. si $i > 1$ décrémenter i et retourner à l'étape 3.

b. si $i = 1$ retourner à l'étape 2 ($v(a_t)$ reste égale à zéro). Si non, si

$$\mathrm{E}_{t,\mathcal{B}_j^{(i)}}\big(a_t, \mathcal{S}_{a_t,t-1}\big) = 0$$

pour au moins une valeur de $j$ déclarer que $v(a_t) = i$ et retourner à l'étape 2.

5. Tous les noeuds $a_t$ candidats ayant été considérés, prendre celui $a_t^*$ qui maximise le nombre de sources nouvellement décodées par la destination comparativement au précédent round :

$$a_t^* = \underset{a_t \in \{s_1, ..., s_M, r_1, ..., r_L\}}{\mathrm{argmax}} v(a_t)$$

S'il y a plus d'un noeud $a_t^*$ qui maximise la fonction alors choisir parmi ces noeuds un noeud de manière aléatoire.

Pour chacune des trois réalisations à haute charge de signalisation, le nombre de bits de signalisation (feedback) par round pour le message ACK/NACK commun et le message de sélection de noeud est au plus :
$$c_1 = \lceil \log_2(M + L) \rceil + 1$$.

Selon un mode de réalisation, dite à faible charge de signalisation, la sélection des noeuds pour les $X$ premiers rounds est déterminée de manière aléatoire en avance. Chacun des noeuds du réseau utilise un générateur aléatoire avec un même aléa. Ainsi il n'y a pas de signalisation de retour (feedback) portant une information de sélection de noeuds depuis la destination vers les noeuds coopératifs ce qui permet de réduire la bande passante occupée par la signalisation en particulier par rapport au mode avec haute charge de signalisation. Deux mises en oeuvre simples sont décrites.

Une première mise en oeuvre avec sélection aléatoire considère qu'il n'y a pas de message ACK/NACK commun à la fin de chacun des $X$ rounds. Ainsi, que la destination ait décodé ou pas les sources avant la fin d'un round, il y a coopération du noeud relais sélectionné aléatoirement. Dans un $1 - \varepsilon_{com}$ pourcentage des cas il n'y a aucun échange de signalisation pendant la 2nde phase.

Une deuxième mise en oeuvre avec sélection aléatoire prend en compte un message ACK/NACK commun à la fin de chacun des $X$ rounds pour stopper la coopération en cas de ACK et basculer sur une nouvelle trame. Selon cette mise en oeuvre un décodage correct de toutes les sources par la destination peut donc permettre de stopper les transmissions coopératives au prix d'un bit de signalisation par round.

Références :

[1] A. Mohamad, R. Visoz and A. O. Berthet, "Cooperative Incremental Redundancy Hybrid Automatic Repeat Request Strategies for Multi-Source Multi-Relay Wireless Networks," in IEEE Communications Letters, vol. 20, no. 9, pp. 1808-1811, September 2016»

**Revendications**

1. Procédé (1) de transmission de messages successifs formant une trame dans un système de télécommunication à $M$ sources ($s_1$, ..., $s_M$), $L$ relais ($r_1$, ..., $r_L$) et une destination ($d$), $M > 1$, $L \geq 1$ selon un schéma d'accès multiple orthogonal du canal de transmission entre les $M$ sources et les $L$ relais avec un nombre maximum de $M + T_{max}$ intervalles de temps par trame transmise dont $M$ intervalles alloués pendant une première phase à la transmission successive des $M$ sources, et $T_{max}$ intervalles de transmission coopérative alloués pendant une deuxième phase à un ou plusieurs noeuds pris parmi les sources et les relais selon une sélection déterminée, **caractérisé en ce qu'**il comprend :

- une phase initiale d'adaptation de lien avec détermination d'un débit initial pour chaque source par la destination sur la base d'un SNR moyen de chacun des liens du système et avec transmission à chaque source de ce débit initial,

- pour chaque trame parmi plusieurs trames, les transmissions successives des messages des $M$ sources pendant les $M$ intervalles de la première phase avec respectivement des schémas de modulation et de codage déterminés à partir des débits initiaux,

et **caractérisé en ce que**, pour maximiser le débit somme de toutes les sources sous contrainte d'un BLER moyen cible $\varepsilon_{com}$ à l'issue de $X \geq 1$ transmissions coopératives, le procédé comprend une maximisation du débit individuel de chaque source en considérant les messages des autres sources connus sous contrainte d'un BLER moyen individuel cible $\varepsilon_{com}/M$ à l'issue des X transmissions coopératives et, après maximisation, une augmentation ou une diminution simultanée des $M$ débits individuels pris ensemble jusqu'à obtenir une probabilité de coupure commune inférieure à $\varepsilon_{com}$.

2. Procédé (1) de transmission selon la revendication 1 selon lequel le procédé comprend en outre pendant la 2$^{nde}$ phase à l'issue des $X$ transmissions coopératives :

   - une transmission coopérative d'un ou de plusieurs noeuds pris parmi les sources et les relais selon une sélection de type IR-HARQ.

3. Procédé (1) de transmission selon l'une des revendications 1 à 2 selon lequel la sélection d'un noeud ($a_t$) à un intervalle $t$ parmi les noeuds ayant décodés correctement à l'intervalle $t$ - 1 au moins une source (s) que la destination n'a pas correctement décodée à cet intervalle t - 1, est déterminée par la destination en tenant compte des gains ($h = [h_{s_1,d}, ..., h_{s_M,d}, h_{r_1,d}, ..., h_{r_L,d}]$) des canaux entre les noeuds et la destination.

4. Procédé (1) de transmission selon la revendication 3 selon lequel le noeud ($a_t$) sélectionné est celui dont le canal avec la destination présente le meilleur gain.

5. Procédé (1) de transmission selon l'une des revendications 1 à 2 selon lequel les $X$ transmissions coopératives interviennent selon une sélection connue par la destination et les relais à l'avance.

6. Procédé (1) de transmission selon l'une des revendications 1 à 2 selon lequel la sélection est déterminée par la destination et de type IR-HARQ pour toutes les transmissions coopératives.

7. Procédé (1) de transmission selon l'une des revendications 2 et 6 selon lequel pour toute sélection de type IR-HARQ, la destination sélectionne le noeud qui maximise le nombre de sources décodées correctement après retransmission par ce noeud, le nombre de sources décodés correctement étant issue d'une prédiction par la destination.

8. Système comprenant $M$ sources ($s_1$, ..., $s_M$), $L$ relais ($r_1$, ..., $r_L$) et une destination ($d$), $M > 1$, $L \geq 1$, avec adaptation de liens, pour une mise en oeuvre d'un procédé de transmission selon l'une des revendications 1 à 7.

**Patentansprüche**

1. Verfahren (1) zur Übertragung sukzessiver Nachrichten, die einen Rahmen bilden, in einem Telekommunikationssystem mit M Quellen ($s_1$,...,$s_M$), L Relais ($r_1$,...,$r_L$) und einem Zielort ($d$), $M > 1$, $L \geq 1$, gemäß einem orthogonalen Mehrfachzugriffsverfahren des Übertragungskanals zwischen den M Quellen und den $L$ Relais mit einer maximalen Anzahl von $M + T_{max}$ Zeitintervallen pro übertragenem Rahmen, darunter $M$ Intervalle, die während einer ersten Phase der sukzessiven Übertragung der $M$ Quellen zugewiesen werden, und $T_{max}$ Intervalle für eine kooperative Übertragung, die während einer zweiten Phase einem oder mehreren Knoten, die gemäß einer bestimmten Auswahl aus den Quellen und den Relais ausgewählt werden, zugewiesen werden, **dadurch gekennzeichnet, dass** es Folgendes beinhaltet:

   - eine Anfangsphase der Verknüpfungsanpassung mit Bestimmung, durch den Zielort, einer Anfangsrate für jede Quelle auf Basis eines mittleren SNR jeder der Verknüpfungen des Systems und mit Übertragung dieser Anfangsrate an jede Quelle,
   - für jeden Rahmen einer Vielzahl von Rahmen, die sukzessiven Übertragungen der Nachrichten der $M$ Quellen während der $M$ Intervalle der ersten Phase mit jeweils auf Basis der Anfangsraten bestimmten Modulations- und Codierungsschemata,

und **dadurch gekennzeichnet, dass** das Verfahren, um die Summenrate aller Quellen unter Beachtung einer mittleren Ziel-BLER $\varepsilon_{com}$ nach $X \geq 1$ kooperativen Übertragungen zu maximieren, Folgendes beinhaltet: eine Maximierung der individuellen Rate jeder Quelle unter Berücksichtigung der bekannten Nachrichten der anderen Quellen unter Beachtung einer individuellen mittleren Ziel-BLER $\varepsilon_{com}/M$ nach X kooperativen Übertragungen, und, nach der Maximierung, eine gleichzeitige Erhöhung oder Verringerung der $M$ individuellen Raten zusammen genommen, bis eine Gesamtausfallwahrscheinlichkeit kleiner $\varepsilon_{com}$ erhalten wird.

2. Übertragungsverfahren (1) nach Anspruch 1, wobei das Verfahren während der 2. Phase nach den $X$ kooperativen Übertragungen ferner Folgendes beinhaltet:

   - eine kooperative Übertragung eines oder mehrerer Knoten, die gemäß einer Auswahl vom Typ IR-HARQ aus den Quellen und den Relais ausgewählt werden.

3. Übertragungsverfahren (1) nach einem der Ansprüche 1 bis 2, wobei die Auswahl eines Knotens ($a_t$) in einem Intervall $t$ aus denjenigen Knoten, die in dem Intervall t - 1 mindestens eine Quelle (s) korrekt decodiert haben, die der Zielort in diesem Intervall t - 1 nicht korrekt decodiert hat, durch den Zielort unter Berücksichtigung der Verstärkungen ($\boldsymbol{h} = [h_{s_1,d}, ..., h_{s_M,d}, h_{r_1,d}, ..., h_{r_L,d}]$) der Kanäle zwischen den Knoten und dem Zielort bestimmt wird.

4. Übertragungsverfahren (1) nach Anspruch 3, wobei der ausgewählte Knoten ($a_t$) derjenige ist, dessen Kanal zu dem Zielort die beste Verstärkung aufweist.

5. Übertragungsverfahren (1) nach einem der Ansprüche 1 bis 2, wobei die $X$ kooperativen Übertragungen gemäß einer Auswahl erfolgen, die dem Zielort und den Relais im Vorfeld bekannt ist.

6. Übertragungsverfahren (1) nach einem der Ansprüche 1 bis 2, wobei die Auswahl durch den Zielort bestimmt wird und für alle kooperativen Übertragungen vom Typ IR-HARQ ist.

7. Übertragungsverfahren (1) nach einem der Ansprüche 2 und 6, wobei für jede Auswahl vom Typ IR-HARQ der Zielort denjenigen Knoten auswählt, der die Anzahl von korrekt decodierten Quellen nach erneuter Übertragung durch diesen Knoten maximiert, wobei die Anzahl von korrekt decodierten Quellen aus einer Vorhersage durch den Zielort hervorgeht.

8. System, beinhaltend $M$ Quellen ($s_1,... ,s_M$), $L$ Relais ($r_1, ...,r_L$) und einen Zielort ($d$), $M > 1$, $L \geq 1$, mit Verknüpfungsanpassung, zur Umsetzung eines Übertragungsverfahrens nach einem der Ansprüche 1 bis 7.

**Claims**

1. Method (1) for transmitting successive messages forming a frame in a telecommunication system with $M$ sources ($s_1,...,s_M$), $L$ relays ($r_1,...,r_L$) and a destination ($d$), $M > 1$, $L \geq 1$ according to an orthogonal multiple-access channel scheme between the $M$ sources and the $L$ relays with a maximum number of $M + T_{max}$ time intervals per frame transmitted, including $M$ intervals allocated during a first phase to the successive transmission of the $M$ sources, and $T_{max}$ cooperative transmission intervals allocated during a second phase to one or more nodes taken from among the sources and the relays according to a determined selection, **characterized in that** it comprises:

   - an initial phase of link adaptation with an initial rate being determined for each source by the destination on the basis of an average SNR of each of the links of the system and with this initial rate being transmitted to each source,
   - for each frame from among several frames, successively transmitting the messages from the $M$ sources during the $M$ intervals of the first phase with respective modulation and coding schemes determined on the basis of the initial rates,

   and **characterized in that**, in order to maximize the total rate of all the sources under the constraint of a target average BLER $\varepsilon_{com}$ at the end of $X \geq 1$ cooperative transmissions, the method comprises maximizing the individual rate of each source, considering the known messages from the other sources under the constraint of a target individual average BLER $\varepsilon_{com}/M$ at the end of the $X$ cooperative transmissions, and, after maximization, simultaneously decreasing or increasing the $M$ individual rates taken together until a common outage probability which is less than $\varepsilon_{com}$ is obtained.

2. Transmission method (1) according to Claim 1, according to which the method further comprises, during the 2nd phase at the end of the *X* cooperative transmissions:

- a cooperative transmission of one or more nodes taken from among the sources and the relays according to a selection of IR-HARQ type.

3. Transmission method (1) according to one of Claims 1 and 2, according to which the selection of a node ($a_t$) at an interval *t* from among the nodes which correctly decoded at the interval *t* - 1 at least one source (s) which the destination did not correctly decode at this interval *t* - 1 is determined by the destination, taking into account the gains ($h = [h_{s_1,d}, ..., h_{s_M,d}, h_{r_1,d}, ..., h_{r_L,d}]$) of the channels between the nodes and the destination.

4. Transmission method (1) according to Claim 3, according to which the selected node ($a_t$) is the one the channel with the destination of which has the best gain.

5. Transmission method (1) according to one of Claims 1 and 2, according to which the *X* cooperative transmissions occur according to a selection which is known by the destination and the relays in advance.

6. Transmission method (1) according to one of Claims 1 and 2, according to which the selection is determined by the destination and is of IR-HARQ type for all the cooperative transmissions.

7. Transmission method (1) according to one of Claims 2 and 6, according to which, for any selection of IR-HARQ type, the destination selects the node which maximizes the number of sources decoded correctly after retransmission by this node, the number of correctly decoded sources originating from a prediction by the destination.

8. System comprising *M* sources ($s_1,...,s_M$), *L* relays ($r_1,...,r_L$) and a destination (*d*), *M* > *1*, *L* $\geq$ *1*, with link adaptation, for implementing a transmission method according to one of Claims 1 to 7.

Fig.1

Fig.2

Fig.3

28

**EP 3 639 427 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. MOHAMAD ; R. VISOZ ; A. O. BERTHET.** Cooperative Incremental Redundancy Hybrid Automatic Repeat Request Strategies for Multi-Source Multi-Relay Wireless Networks. *IEEE Communications Letters,* Septembre 2016, vol. 20 (9), 1808-1811